# EUROPÄISCHE PATENTSCHRIFT

(11) **EP 3 838 510 B1**
(45) Veröffentlichungstag und Bekanntmachung des Hinweises auf die Patenterteilung: **06.03.2024**
(21) Anmeldenummer: 21154362.4
(22) Anmeldetag: 30.07.2019
(51) Int. Cl.: B25J 15/02, F16D 3/10

(54) **AUTOMATISIERUNGSKOMPONENTE, INSBESONDERE GREIFEINHEIT, LINEAREINHEIT ODER SCHWENKEINHEIT**
AUTOMATION COMPONENT, IN PARTICULAR GRIPPER UNIT, LINEAR UNIT OR PIVOTING UNIT
COMPOSANT D'AUTOMATISATION, EN PARTICULIER UNITÉ DE PRÉHENSION, UNITÉ LINÉAIRE OU UNITÉ PIVOTANTE

(30) Priorität: 06.08.2018 DE 102018119064
(43) Veröffentlichungstag der Anmeldung: 23.06.2021
(62) Teilanmeldung aus: 19189178.7
(73) Patentinhaber: Schunk GmbH & Co. KG Spann- und Greiftechnik, 74348 Lauffen am Neckar (DE)
(72) Erfinder: Kirsten, Benjamin, 74336 Brackenheim (DE)
(74) Vertreter: DREISS Patentanwälte PartG mbB

(56) Entgegenhaltungen:
- DE-A1- 3 410 601
- DE-A1-102005 055 966
- DE-A1-102014 010 014

## Beschreibung

Die Erfindung betrifft eine Automatisierungskomponente, insbesondere eine Greifeinheit, eine Lineareinheit oder eine Schwenkeinheit.

Unter Automatisierungskomponenten werden Komponenten der Automatisierungstechnik verstanden, insbesondere in Robotersystemen verbaute oder an Robotersysteme anbaubare Greifeinheiten, Lineareinheiten, Schwenkeinheiten, oder sonstige Einheiten, wie beispielsweise Wechseleinheiten oder Glieder von Roboterarmen. Die Automatisierungskomponenten zeichnen sich dadurch aus, dass sie zusammen mit anderen Komponenten letztendlich ein für die Handhabung und/oder Bearbeitung von Gegenständen einsetzbares Automatisierungssystem bilden. Ein solches Automatisierungssystem kann beispielsweise an einem Roboterarm eine Automatisierungskomponente als Endeffektor aufweisen, die je nach Greifaufgabe austauschbar ist. Dabei können unterschiedliche ausgebildete, unterschiedlichen Anforderungen gerecht werdende Greifeinheiten bereitgestellt werden.

Die von der Erfindung betroffenen Automatisierungskomponenten zeichnen sich ferner dadurch aus, dass sie einen Antrieb und ein vom Antrieb um eine Drehachse rotatorisch angetriebenes Drehglied aufweisen. Bei dem Antrieb handelt es sich insbesondere um einen Elektromotor, eine Zylinder-Kolben-Antrieb oder um einen pneumatischen arbeitenden Drehantrieb (Luftmotor).

Bei den von der Erfindung betroffenen Automatisierungskomponenten ist ein Getriebe vorgesehen, das ein Eingangsglied und ein Ausgangsglied aufweist, wobei das Stellglied mit dem Eingangsglied bewegungsgekoppelt ist. Das Getriebe ist so ausgebildet ist, dass eine Selbsthemmung derart besteht, dass ein durch Haftreibung verursachter Hemmwiderstand überschritten werden muss, um ein Bewegen des Ausgangsgliedes zu ermöglichen. Bei dem Getriebe kann es sich beispielsweise um ein Stirnradgetriebe, ein Spindelgetriebe, ein Keilhakengetriebe oder ein ähnliches Getriebe handeln. Die Selbsthemmung kann dabei dadurch erreicht werden, dass die miteinander zusammenwirkenden Getriebeteile ein entsprechendes Übersetzungsverhältnis aufweisen. Die Selbsthemmung kann aber auch dadurch zustande kommen, dass aufgrund des Haltens beispielsweise eines Bauteils die miteinander in Verbindung stehenden Bauteile verklemmen, sodass letztlich ein Hemmwiderstand entsteht.

Gerade bei derartigen Automatisierungskomponenten, die insbesondere als Greifeinheiten ausgebildet sein können, hat es sich gezeigt, dass der Antrieb eine nicht unerhebliche Anfahrleistung zur Überschreitung des Hemmwiderstandes aufweisen muss, insbesondere dann, wenn die Bewegung über den gesamten Bewegungsbereich gleich schnell durchgeführt werden soll. Die zum Einsatz kommenden Antriebe, und insbesondere Elektromotoren, müssen folglich entsprechend stark ausgelegt sein. Insbesondere dann, wenn beim Schließvorgang auf "Block" gefahren wird, bewirkt die kinetische Energie des Antriebsstranges eine Steigerung der Schließkraft, was letztlich zu einer schließgeschwindigkeitabhängigen Schließkraft und zu einer entsprechend hohen, erforderlichen Lösekraft zum Lösen des Hemmwiderstands führt. Um zu hohe Lösekräfte zu vermeiden, wird der Antrieb teilweise schon vor Erreichen der Endlage in seiner Leistung reduziert.

Aus der DE 10 2005 055966 A1 ist eine Blechgreif- oder Blechspannvorrichtung mit einer Anlauf-Freikupplung als Axialkupplung bekannt, welche es ermöglicht hohe Greif- oder Spannkräfte auf die drehbewegliche Spannbacke, bei kompakter Bauweise des Greifers, zu übertragen.

Aus der DE 10 2014 010 014 A1 ist eine Automatisierungskomponente mit Merkmalen des Oberbegriffs des Anspruchs 1 bekannt.

Der vorliegenden Erfindung liegt die Aufgabe zugrunde, eine Automatisierungskomponente der eingangs genannten Art bereitzustellen, bei welcher Antriebe mit geringerer Anfahrleistung Verwendung finden können. Dadurch können die Automatisierungskomponenten insgesamt kleiner bauen und es wird weniger Energie beim Anfahren benötigt. Diese Aufgabe wird gelöst durch eine Automatisierungskomponente mit den Merkmalen des Patentanspruchs 1.

Dies hat den Vorteil, dass der Antrieb bei Umkehr der Bewegungsrichtung innerhalb des Freilaufs im Freibereich, also wenn kein Hemmwiderstand anliegt, einen ausreichenden dynamischen Schwung entwickeln kann, um dann, wenn der Freibereich durchlaufen ist, den Hemmwiderstand zu überwinden. Der Antrieb kann folglich im Freibereich "Schwung holen", um dann mit diesem "Schwung", bzw. unter Unterstützung der daraus resultierenden kinetischen Energie den Hemmwiderstand zu überwinden. Bei dieser Lernauffahrt im Freibereich baut der Antrieb eine kinetische Energie auf, die das Lösen der Selbsthemmung unterstützt. Hierbei ist eine hohe Übersetzung zwischen Antrieb und Stellglied hilfreich, da dadurch das auf das Stellglied wirkende Massenträgheitsmoment, welches letztlich für die kinetische Energie relevant ist, vorteilhaft zunimmt. Insgesamt können dadurch kleiner bauende Antriebe mit einer insgesamt schwächeren Leistung zum Einsatz kommen.

Dabei ist vorgesehen, dass das Stellglied als vom Antrieb rotatorisch antreibbares Drehglied ausgebildet ist. Das Getriebe ist dann insbesondere als Spindelgetriebe ausgebildet ist, das als Eingangsglied eine Spindelwelle, ein an der Spindelwelle angeordnetes Spindelgewinde und als Ausgangsglied einen das Spindelgewinde kämmender Mitnehmer umfasst. Zwischen dem Drehglied und der Spindelwelle ist der Freilauf dann als Winkelfreilauf ausgebildet, so dass bei Umkehr der Drehrichtung des Drehglieds das Drehglied über einen Freiwinkel entkoppelt von der Spindelwelle verdrehbar ist.

Der Mitnehmer kann so angeordnet sein, dass er parallel zur Spindelwelle verfahrbar ist. Zur Vermeidung, dass bei Nichtbetätigen des Antriebs der Wirkabschnitt, beispielsweise durch Schwerkraft, bewegt werden kann, ist ferner vorgesehen, wenn zwischen dem Spindelgewinde und dem Wirkabschnitt eine Selbsthemmung besteht. Aufgrund der Selbsthemmung muss ein durch Haftreibung verursachter Hemmwiderstand überschritten werden, um ein Verdrehen der Spindelwelle und damit ein Bewegen des Mitnehmers zu ermöglichen.

Der Winkelfreilauf weist ein mit dem Drehglied drehfest gekoppeltes und insbesondere damit unmittelbar verbundenes erstes Element und ein mit der Spindelwelle drehfest gekoppeltes und insbesondere damit unmittelbar verbundenes zweites Element auf. Das erste Element bzw. das zweite Element weist ferner sich parallel zur Drehachse erstreckende Drehabschnitte und zwischen jeweils zwei benachbarten Drehabschnitten eine Freilücke auf. Das zweite Element bzw. das erste Element sieht dann in die jeweilige Freilücke eingreifende Mitnahmeabschnitte vor, die über den Freiwinkel in den Freilücken frei, also unabhängig vom jeweils anderen Element, verdrehbar sind. Hierdurch kann der Winkelfreilauf auf vergleichsweise einfache Art und Weise realisiert werden.

Die Freilücken sind dabei vorzugsweise auf der der Gewindespindel zugewandten Seite randoffen. Dies hat zur Folge, dass bei der Montage die Mitnahmeabschnitte axial in die Freilücken eingeführt werden können.

Eine vorteilhafte Ausbildung sieht vor, dass insgesamt zwei Drehabschnitte vorgesehen sind, die zwei Freilücken begrenzen, wobei sich die Freilücken über einen Winkel α im Bereich von 90° bis 150, und vorzugsweise im Bereich von 110° bis 130°, erstrecken. Freilücken mit einem derartigen Winkel α haben sich als vorteilhaft erwiesen und bieten dem Antrieb ausreichend Freilauf, um eine geeignete Dynamik zu entwickeln. Das Vorsehen von zwei Drehabschnitten hat ferner den Vorteil, dass beim Aufschlagen wirkende Querkräfte gleichmäßig aufgenommen werden.

In diesem Zusammenhang ist es vorteilhaft, wenn zwei Mitnahmeabschnitte vorgesehen sind, die sich über einen Winkel β in einem Bereich von 45° bis 75° und vorzugsweise in dem Bereich von 55° bis 65° erstrecken. Der Freiwinkel berechnet sich dann wie folgt: Winkel α minus Winkel β. Wenn der Winkel α beispielsweise 120° beträgt und der Winkel β 60° beträgt, dann ergibt sich insgesamt ein Freiwinkel von 60°. Es hat sich als vorteilhaft erwiesen, wenn dieser Freiwinkel so groß ist, dass der Antrieb am Ende des Freiwinkels die volle Winkelgeschwindigkeit bereitstellt und damit die kinetische Energie ihr Maximum erreicht.

Gemäß der Erfindung kann weiterhin vorgesehen sein, dass das erste Element einen ringartig ausgebildeten Aufnahmeabschnitt zur drehfesten Aufnahme des Drehglieds aufweist. Das erste Element kann über einen derartigen Aufnahmeabschnitt beispielsweise auf das Drehglied aufgepresst, aufgeklebt, auf gespeist, aufgeschraubt oder dergleichen sein. Die Teile können auch einstückig ausgebildet sein.

Ferner ist denkbar, dass das zweite Element ebenfalls einen ringartig ausgebildeten Aufnahmeabschnitt zur drehfesten Aufnahme der Spindelwelle aufweist. Auch hier ist denkbar, dass das zweite Element auf die Spindelwelle aufgepresst aufgepresst, aufgeklebt, auf gespeist, aufgeschraubt oder dergleichen ist. Die Teile können auch einstückig ausgebildet sein.

Ferner hat sich als vorteilhaft herausgestellt, wenn das Drehglied hohl ausgebildet ist, und wenn die Spindelwelle das Drehglied durchgreift. Der Abschnitt der Spindelwelle, der das Drehglied durchgreift, kann dann für weitere Funktionen, beispielsweise als Lagerstelle oder auch Signalgeber, Verwendung finden.

In diesem Zusammenhang ist weiter vorteilhaft, wenn die Automatisierungskomponente ein Gehäuse mit einem Wandabschnitt aufweist, und wenn die Spindelwelle den Wandabschnitt durchgreift oder in diesen eingreift, so dass ihr freies Ende von außerhalb des Gehäuses zugänglich ist. Das freie Ende der Spindelwelle kann dann ebenfalls als Signalgeber dienen oder mit anderen Funktionskomponenten, beispielsweise mit zusätzlichen Antrieben oder Bremseinheiten, gekoppelt sein.

Insbesondere dann, wenn die Automatisierungskomponente als Greifeinheit gebildet ist, ist vorteilhaft, wenn die Gewindespindel zwei Spindelgewinde mit gegenläufigen Steigungen aufweist, wobei jedes Spindelgewinde dann einen Mitnehmer antreibt. Der Mitnehmer kann dann beispielsweise an einer Greifbacke angeordnet oder als Greifbacke ausgebildet sein, an der dann Greiffinger angeordnet werden können.

Zur Realisierung einer geeigneten Selbsthemmung ist es vorteilhaft, wenn die Steigung des jeweiligen Spindelgewindes kleiner oder gleich 7° ist, und insbesondere im Bereich von 3° liegt.

Weitere Aspekte der Erfindung sind:
Aspekt 1: Automatisierungskomponente (10), insbesondere Greifeinheit (12), Lineareinheit oder Schwenkeinheit, mit einem Antrieb (16), mit einem vom Antrieb (16) angetriebenen Stellglied (24), mit einem Getriebe (28), das ein Eingangsglied (26) und ein Ausgangsglied (34) aufweist, wobei das Stellglied (24) mit dem Eingangsglied (26, 64) bewegungsgekoppelt ist, und wobei das Getriebe (28) so ausgebildet ist, dass eine Selbsthemmung derart besteht, dass ein durch Haftreibung verursachter Hemmwiderstand überschritten werden muss, um ein Bewegen des Ausgangsgliedes (34) zu ermöglichen, **dadurch gekennzeichnet,** dass zwischen dem Stellglied (24) und dem Eingangsglied (26, 64) ein Freilauf (40, 68) vorgesehen ist, der derart ausgebildet ist, dass bei Umkehr der Bewegungsrichtung des Stellglieds (24) das Stellglied (24) über einen Freibereich (78)entkoppelt vom Eingangsglied (26, 64) bewegbar ist.
Aspekt 2: Automatisierungskomponente (10) nach Aspekt 1, dadurch gekennzeichnet, dass das Stellglied als vom Antrieb rotatorisch antreibbares Drehglied (24) ausgebildet ist, dass das Getriebe als Spindelgetriebe (28) ausgebildet ist, das als Eingangsglied eine Spindelwelle (26), ein an der Spindelwelle angeordnetes Spindelgewinde (30, 32) und als Ausgangsglied einen das Spindelgewinde (30, 32) kämmender Mitnehmer (34) umfasst, wobei der zwischen dem Drehglied (24) und der Spindelwelle (26) vorgesehene Freilauf als Winkelfreilauf (40) ausgebildet ist, so dass bei Umkehr der Drehrichtung des Drehglieds (24) das Drehglied (24) über einen Freiwinkel entkoppelt von der Spindelwelle (26) verdrehbar ist.
Aspekt 3: Automatisierungskomponente (10) nach Aspekt 2, dadurch gekennzeichnet, dass der Winkelfreilauf (40) ein mit dem Drehglied (24) drehfest gekoppeltes erstes Element (42) und ein mit der Spindelwelle (26) drehfest gekoppeltes zweites Element (44) aufweist, wobei das erste Element (42) bzw. das zweite Element (44) sich parallel zur Drehachse (54) erstreckende Drehabschnitte (56) und zwischen jeweils zwei benachbarten Drehabschnitten (56) eine Freilücke (50) aufweist und wobei das zweite Element (44) bzw. erste Element (42) das in die jeweilige Freilücke (58) eingreifende Mitnahmeabschnitte (60) aufweist, wobei die Mitnahmeabschnitte (60) über den Freiwinkel in den Freilücken (58) frei verdrehbar sind.
Aspekt 4: Automatisierungskomponente (10) nach Aspekt 3, dadurch gekennzeichnet, dass die Freilücken (58) zum axialen Einführen der Mitnehmerabschnitte (60) randoffen ausgebildet sind.
Aspekt 5: Automatisierungskomponente (10) nach Aspekt 4 oder 3, dadurch gekennzeichnet, dass zwei Drehabschnitte (56) vorgesehen sind, die zwei Freilücken (58) begrenzen, wobei sich die Freilücken (58) über einen Winkel α im Bereich von 90° bis 150° und vorzugsweise im Bereich von 110° bis 130° erstrecken.
Aspekt 6: Automatisierungskomponente (10) nach Aspekt 4 oder 5, dadurch gekennzeichnet, dass zwei Mitnahmeabschnitte (60) vorgesehen sind, die sich über einen Winkel β im Bereich von 45° bis 75° und vorzugsweise im Bereich von 55° bis 65° erstrecken.
   Automatisierungskomponente (10) nach einem der Aspekte 6 bis 9, dadurch gekennzeichnet, dass das erste Element (42) einen ringartig ausgebildeten Aufnahmeabschnitt (50) zur drehfesten Aufnahme des Drehglieds (24) aufweist.
Aspekt 7: Automatisierungskomponente (10) nach einem der Aspekt3 3 bis 6, dadurch gekennzeichnet, dass das zweite Element (44) einen ringartig ausgebildeten Aufnahmeabschnitt (50) zur drehfesten Aufnahme der Spindelwelle (26) aufweist.
Aspekt 8: Automatisierungskomponente (10) nach einem der vorhergehgehenden Aspekte, dadurch gekennzeichnet, dass das Drehglied (24) hohl ausgebildet ist, und dass die Spindelwelle (26) das Drehglied durchgreift.
Aspekt 9: Automatisierungskomponente (10) nach einem der vorhergehenden Aspekte, dadurch gekennzeichnet, dass die Automatisierungskomponente (10) ein Gehäuse (14) mit einem Wandabschnitt (46) aufweist, dass die Spindelwelle (26) den Wandabschnitt (46) durchgreift oder in diesen eingreift, so dass ihr freies Ende (48) von außerhalb des Gehäuses (14) zugänglich ist.
Aspekt 10: Automatisierungskomponente (10) nach einem der vorhergehenden Aspekte, dadurch gekennzeichnet, dass die Spindelwelle (26) zwei Spindelgewinde (30, 32) mit gegenläufigen Steigungen aufweist, wobei jedes Spindelgewinde (30, 32) einen Mitnehmer (34) antreibt.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: einen Längsschnitt durch eine erfindungsgemäße Automatisierungskomponente;
- Figur 2: die für die Erfindung wesentlichen Funktionsbauteile der Automatisierungskomponente gemäß Figur 1 in perspektivischer Ansicht; und
- Figur 3 bis 6: den Winkelfreilauf der Automatisierungskomponente gemäß Figur 1 und 2 in verschiedenen Ansichten.

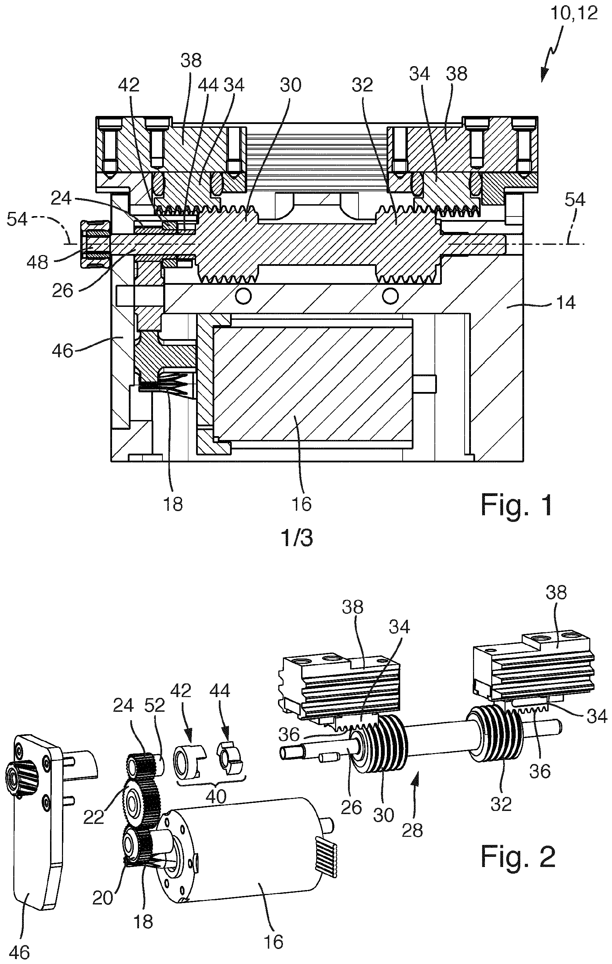

In der Figur 1 ist eine Automatisierungskomponente 10 in Form einer Greifeinheit 12 im Längsschnitt gezeigt. Die Greifeinheit 12 umfasst ein Gehäuse 14, in dem ein Antrieb 16 in Form eines Elektromotors untergebracht ist. Bei einer anderen Ausgestaltung der Erfindung ist denkbar, dass der Elektromotor in einem separaten Anbaugehäuse untergebracht ist.

Der Antrieb 16 weist eine Antriebswelle 18 mit einem Ritzel auf. Der Antriebswelle 18 ist eine Getriebeeinheit mit zwei Getrieberädern 20, 22 nachgeschaltet, was in Figur 2 deutlich zu erkennen ist. Die letzte Getriebestufe wird von einem Drehglied 24 gebildet. Die Getrieberäder 20, 22, die Antriebswelle 18 und das Drehglied 24 sind dabei so angeordnet, dass ihre Drehachsen jeweils parallel zueinander verlaufen.

Über das Drehglied 24 wird eine Spindelwelle 26 eines Spindelgetriebes 28 angetrieben. Das Spindelgetriebe 28 umfasst neben der Spindelwelle 26 zwei auf der Spindelwelle 26 angeordnete, und drehfest mit der Spindelwelle 26 verbundene Spindelgewinde 30 und 32. Die beiden Spindelgewinde 30, 32 weisen gegenläufige Steigungen auf. Die Spindelwelle 26 bildet dabei das Eingangsglied des Spindelgetriebes 28.

Ferner sind zwei parallel zur Spindelwelle 26 verfahrbare Mitnehmer 34 vorgesehen, die jeweils einen mit dem jeweiligen Spindelgewinde 30, 32 zusammenwirkenden Wirkabschnitt 36 aufweisen. Die Mitnehmer 34 bilden dabei Ausgangsglieder des Spindelgetriebes 28. Die Ausbildung ist dabei derart, dass beim Verdrehen der Spindelwelle 26 die beiden Mitnehmer 34 aufeinander zu bzw. voneinander weg verfahren werden.

Die Mitnehmer 34 sind an der Unterseite von zwei Greifbacken 38 angeordnet. An den Greifbacken 38 können zum Greifen von Gegenständen Greiffinger angeordnet werden.

Die beiden Spindelgewinde 30 und 32 sowie die beiden Wirkabschnitte 36 sind so ausgebildet, dass eine Selbsthemmung zwischen diesen Bauteilen gegeben ist. Die Selbsthemmung ist dabei so, dass ein durch Haftreibung zwischen dem jeweiligen Spindelgewinde 30, 32 und dem jeweils damit zusammenwirkenden Wirkabschnitt 36 ein durch Haftreibung verursachter Hemmwiderstand überschritten werden muss, um ein Verdrehen der Spindelwelle 26 und damit ein Bewegen der Mitnehmer zu ermöglichen. Zur Bereitstellung einer ausreichenden Selbsthemmung weisen die Spindelgewinde 30, 32 eine Steigung auf, die kleiner als 3°, bezogen auf die Achse 54, ist.

Das Vorsehen der Selbsthemmung hat den Vorteil, dass beispielsweise bei Stromausfall, also bei stillstehendem Antrieb 16, die Mitnehmer 34, bzw. die Greifbacken 38, in ihrer Position gesichert sind und nicht ungewollt verfahren werden können.

Wie aus insbesondere Figur 2 deutlich wird, ist zwischen dem Drehglied 24 und der Spindelwelle 26 ein Winkelfreilauf 40 vorgesehen. Der Winkelfreilauf 40 umfasst ein erstes Element 42, das drehfest am Drehglied 24 angeordnet ist und ein zweites Element 44, das drehfest an der Spindelwelle 26 angeordnet ist. Die beiden Elemente 42 und 44 sind dabei so ausgebildet, dass bei Umkehr der Drehrichtung des Drehgliedes 24 das Drehglied 24 über einen Freiwinkel, der bei der gezeigten Ausführungsform ca. 60° beträgt, entkoppelt von der Spindelwelle verdrehbar ist. Dies hat den Vorteil, dass bei Umkehr der Drehrichtung des Antriebs 16 der Antrieb 16 aufgrund des Freiwinkels innerhalb des Freiwinkels nicht den Hemmwiderstand der Selbsthemmung überwinden muss. Insofern kann der Antrieb 16 innerhalb des Freiwinkels einen ausreichenden dynamischen Schwung entwickeln, um dann, nach Ablauf des Freiwinkels, den Hemmwiderstand zu überwinden.

Wie aus Figur 1 und 2 deutlich wird, umfasst das Gehäuse 14 einen abnehmbaren Wandabschnitt 46, an dessen Innenseite insbesondere die Getrieberäder 20, 22 drehbar gelagert sind. Wie aus dem Schnitt gemäß Figur 1 deutlich wird, durchgreift die Spindelwelle 26 den Wandabschnitt 46, so dass ihr freies Ende 48 von außerhalb des Gehäuses 14 zugänglich ist. Die Spindelwelle 26 durchgreift dabei auch das erste Element 42 und das Drehglied 24, ohne dass die Spindelwelle 26 mit diesen Bauteilen bewegungsgekoppelt ist.

Aus dem Schnitt gemäß Figur 1 wird ebenfalls deutlich, dass die Spindelwelle 26 das hohl ausgebildete Drehglied 24 durchgreift.

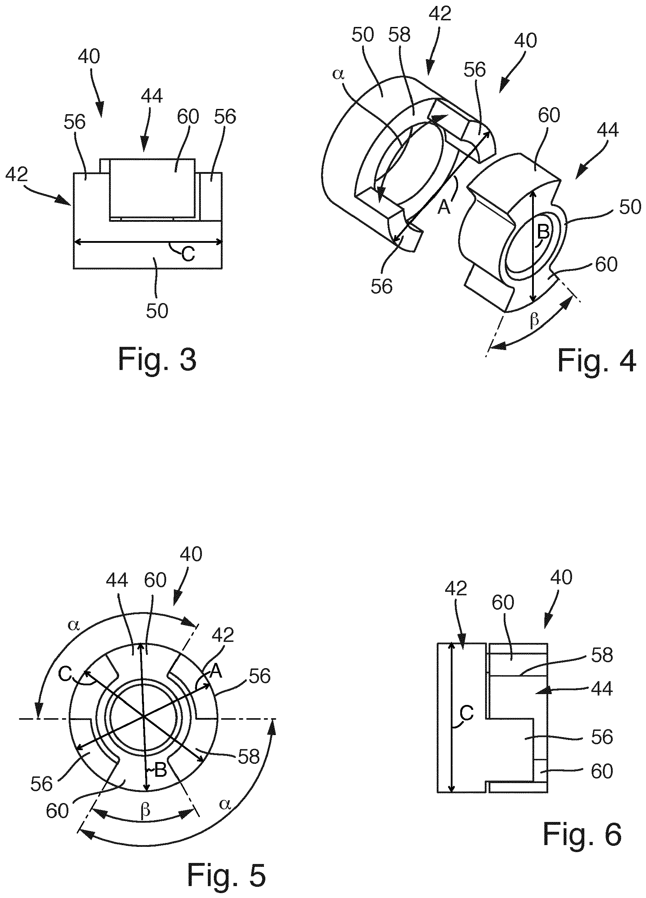

Aus den in den Figuren 3 bis 6 gezeigten Ansichten des Winkelfreilaufs 40 wird deutlich, dass die beiden Elemente 42 und 44 jeweils einen ringartig ausgebildeten Aufnahmeabschnitt 50 aufweisen. Zur Bewegungskopplung des ersten Elements 42 mit dem Drehglied 24 kann das Drehglied 24, bzw. dessen dem ersten Element zugewandten Zylinderabschnitt 52 (der in Figur 2 deutlich zu erkennen ist), mit dem Aufnahmeabschnitt 50 des ersten Elements 42 verpresst werden. Zur drehfesten Bewegungskopplung des zweiten Elements 44 wird der Aufnahmeabschnitt 50 des zweiten Elements 44 auf die Drehwelle 26 aufgepresst.

Wie weiter aus den Figuren 3 bis 6 deutlich wird, weist das erste Element 42 zwei sich parallel zur Drehachse 54 der Spindelwelle 26 erstreckende Drehabschnitte 56 auf. Die beiden Drehabschnitte 56 begrenzen dabei jeweils eine Freilücke 58, die sich jeweils über einen Winkel α von ca. 100° um ihre Mittelachse erstrecken, was in Figur 5 deutlich zu sehen ist. Wie aus insbesondere Figur 4 deutlich wird, sind die Freilücken 58 auf der dem zweiten Element 44 zugewandten Seite randoffen. D.h., das Element 44 kann entlang der Achse 54 in das erste Element 42 eingeschoben werden.

In die beiden Freilücken 58 greift jeweils ein am zweiten Element 44 vorgesehener, sich in radialer Richtung erstreckender Mitnahmeabschnitt 60 ein. Die beiden Mitnahmeabschnitte 60 schließen dabei jeweils einen Winkel β von ca. 60° ein. Die Mitnahmeabschnitte 60 können sich folglich über einen Freiwinkel bewegen, der den Wert des Winkels α minus dem des Winkels β, also bei dem in den Figuren gezeigten Ausführungsbeispiel, den Wert 60° hat. Bei Richtungswechsel des Antriebs 16 wird dadurch erreicht, dass das erste Element 42 über den Freiwinkel von 60° verdreht werden kann, ohne den Hemmwiderstand der Selbsthemmung überwinden zu müssen. Innerhalb dieses Freiwinkels kann folglich der Antrieb 16 beschleunigen und einen ausreichend hohen dynamischen Schwung entwickeln, bevor die Drehabschnitte 56 auf die Mitnahmeabschnitte 60 auftreffen.

Aus insbesondere den Figuren 4 du 5 wird deutlich, dass die Drehabschnitte 56 und die Mitnahmeabschnitte 60 als Ringsegmente ausgebildet sind, wobei der Außendurchmesser A der Drehabschnitte 56 dem Außendurchmesser B der Mitnahmeabschnitte 60 entspricht. Ferner wird insbesondere aus Figur 6 deutlich, dass der Außendurchmesser C des Aufnahmeabschnitts 50 ebenfalls dem Außendurchmesser A der Drehabschnitte 56, und damit auch dem Außendurchmesser B der Mitnahmeabschnitte 60, entspricht.

Erst mit Auftreffen der Drehabschnitte 56 auf den Mitnahmeabschnitt 60 wirkt der Antrieb 16 letztlich auch gegen den Hemmwiderstand der Selbsthemmung. Aufgrund der bereits erfolgten Beschleunigung ist das notwendige Drehmoment des Motors 16 geringer im Vergleich zu dem Fall, in dem der Motor ausgehend vom Stillstand direkt gegen den Hemmwiderstand wirkt.

## Patentansprüche

1. Automatisierungskomponente (10), insbesondere Greifeinheit (12), Lineareinheit oder Schwenkeinheit,
mit einem Antrieb (16),
mit einem vom Antrieb (16) angetriebenen Stellglied (24), das als vom Antrieb rotatorisch antreibbares Drehglied (24) ausgebildet ist,
mit einem Getriebe (28), das als Eingangsglied eine Spindelwelle (26), ein an der Spindelwelle angeordnetes Spindelgewinde (30, 32) und als Ausgangsglied einen das Spindelgewinde (30, 32) kämmenden Mitnehmer (34) umfasst,
wobei das Drehglied (24) mit der Spindelwelle (26) bewegungsgekoppelt ist,
wobei das Getriebe (28) so ausgebildet ist, dass eine Selbsthemmung derart besteht, dass ein durch Haftreibung verursachter Hemmwiderstand überschritten werden muss, um ein Bewegen des Ausgangsgliedes (34) zu ermöglichen,
wobei zwischen dem Drehglied (24) und der Spindelwelle (26) ein Winkelfreilauf (40) vorgesehen ist,
so dass bei Umkehr der Drehrichtung des Drehglieds (24) das Drehglied (24) über einen Freiwinkel entkoppelt von der Spindelwelle (26) verdrehbar bewegbar ist,
wobei der Winkelfreilauf (40) ein mit dem Drehglied (24) drehfest gekoppeltes erstes Element (42) und ein mit der Spindelwelle (26) drehfest gekoppeltes zweites Element (44) aufweist,
wobei das erste Element (42) bzw. das zweite Element (44) zwei sich parallel zur Drehachse (54) erstreckende Drehabschnitte (56) und zwischen jeweils zwei benachbarten Drehabschnitten (56) eine Freilücke (58) aufweist,
wobei das zweite Element (44) bzw. erste Element (42) in die jeweilige Freilücke (58) eingreifende Mitnahmeabschnitte (60) aufweist,
wobei die Mitnahmeabschnitte (60) über den Freiwinkel in den Freilücken (58) frei verdrehbar sind,
**dadurch gekennzeichnet, dass** die Drehabschnitte (56) und die Mitnahmeabschnitte (60) als Ringsegmente ausgebildet sind und der Außendurchmesser (A) der Drehabschnitte (56) dem Außendurchmesser (B) der Mitnahmeabschnitte (60) entspricht.

2. Automatisierungskomponente (10) nach Anspruch 1,
**dadurch gekennzeichnet, dass** die Freilücken (58) zum axialen Einführen der Mitnehmerabschnitte (60) randoffen ausgebildet sind.

3. Automatisierungskomponente (10) nach Anspruch 1 oder 2, **dadurch gekennzeichnet, dass** zwei Drehabschnitte (56) vorgesehen sind, die zwei Freilücken (58) begrenzen, wobei sich die Freilücken (58) über einen Winkel α im Bereich von 90° bis 150° und vorzugsweise im Bereich von 110° bis 130° erstrecken.

4. Automatisierungskomponente (10) nach Anspruch 1, 2 oder 3, **dadurch gekennzeichnet, dass** zwei Mitnahmeabschnitte (60) vorgesehen sind, die sich über einen Winkel β im Bereich von 45° bis 75° und vorzugsweise im Bereich von 55° bis 65° erstrecken.

5. Automatisierungskomponente (10) nach einem der vorhergehenden Ansprüche, **dadurch gekennzeichnet, dass** das erste Element (42) einen ringartig ausgebildeten Aufnahmeabschnitt (50) zur drehfesten Aufnahme des Drehglieds (24) aufweist.

6. Automatisierungskomponente (10) nach einem der Ansprüche, **dadurch gekennzeichnet, dass** das zweite Element (44) einen ringartig ausgebildeten Aufnahmeabschnitt (50) zur drehfesten Aufnahme der Spindelwelle (26) aufweist.

7. Automatisierungskomponente (10) nach Anspruch 5 oder 6, **dadurch gekennzeichnet, dass** der Außendurchmesser (C) des Aufnahmeabschnitts (50) des ersten Elements oder des zweiten Elements (44) dem Außendurchmesser (A) der Drehabschnitte (56) und dem Außendurchmesser (B) der Mitnahmeabschnitte (60) entspricht.

8. Automatisierungskomponente (10) nach einem der vorhergehgehenden Ansprüche, **dadurch gekennzeichnet, dass** das Drehglied (24) hohl ausgebildet ist, und dass die Spindelwelle (26) das Drehglied durchgreift.

9. Automatisierungskomponente (10) nach einem der vorhergehenden Ansprüche, **dadurch gekennzeichnet, dass** die Automatisierungskomponente (10) ein Gehäuse (14) mit einem Wandabschnitt (46) aufweist, dass die Spindelwelle (26) den Wandabschnitt (46) durchgreift oder in diesen eingreift, so dass ihr freies Ende (48) von außerhalb des Gehäuses (14) zugänglich ist.

10. Automatisierungskomponente (10) nach einem der vorhergehenden Ansprüche, **dadurch gekennzeichnet, dass** die Spindelwelle (26) zwei Spindelgewinde (30, 32) mit gegenläufigen Steigungen aufweist, wobei jedes Spindelgewinde (30, 32) einen Mitnehmer (34) antreibt.

## Claims

1. Automation component (10), in particular gripper unit (12), linear unit or pivoting unit,
having a drive (16),
having an actuating member (24) which is driven by the drive (16) and is designed as a rotary member (24) which can be rotationally driven by the drive,
having a gear mechanism (28) which comprises a spindle shaft (26) as an input member, a spindle thread (30, 32) which is arranged on the spindle shaft, and a driver (34) which meshes with the spindle thread (30, 32) as an output member,
the rotary member (24) being movement-coupled to the spindle shaft (26),
the gear mechanism (28) being designed so that there is self-locking such that an inhibiting resistance caused by static friction has to be exceeded in order to allow movement of the output member (34),
an angular overrunning clutch (40) being provided between the rotary member (24) and the spindle shaft (26),
so that, when the direction of rotation of the rotary element (24) is reversed, the rotary member (24) can be rotated over a clearance angle so as to be decoupled from the spindle shaft (26),
the angular overrunning clutch (40) having a first element (42), which is coupled to the rotary member (24) for conjoint rotation, and a second element (44), which is coupled to the spindle shaft (26) for conjoint rotation,
the first element (42) or the second element (44) having two rotary portions (56), which extend in parallel with the axis of rotation (54), and a free space (58) between two adjacent rotary portions (56),
the second element (44) or first element (42) having driver portions (60) which engage in the corresponding free spaces (58),
the driver portions (60) being freely rotatable over the clearance angle into the free spaces (58),
**characterized in that** the rotary portions (56) and the driver portions (60) are designed as ring segments and the outer diameter (A) of the rotary portions (56) corresponds to the outer diameter (B) of the driver portions (60).

2. Automation component (10) according to claim 1, **characterized in that** the free spaces (58) are designed to be open at the edge for axially inserting the driver portions (60).

3. Automation component (10) according to either claim 1 or claim 2, **characterized in that** two rotary portions (56) which delimit two free spaces (58) are provided, the free spaces (58) extending over an angle α in the range of 90° to 150°, and preferably in the range of 110° to 130°.

4. Automation component (10) according to either claim 1, claim 2 or claim 3, **characterized in that** two driver portions (60) which extend over an angle β in the range of 45° to 75°, and preferably in the range of 55° to 65°, are provided.

5. Automation component (10) according to any of the preceding claims, **characterized in that** the first element (42) has an annular receiving portion (50) for receiving the rotary element (24) in a rotationally fixed manner.

6. Automation component (10) according to any of the claims,
**characterized in that** the second element (44) has an annular receiving portion (50) for receiving the spindle shaft (26) in a rotationally fixed manner.

7. Automation component (10) according to either claim 5 or claim 6, **characterized in that** the outer diameter (C) of the receiving portion (50) of the first element or of the second element (44) corresponds to the outer diameter (A) of the rotary portions (56) and the outer diameter (B) of the driver portions (60).

8. Automation component (10) according to any of the preceding claims, **characterized in that** the rotary member (24) is designed to be hollow, and **in that** the spindle shaft (26) engages through the rotary member.

9. Automation component (10) according to any of the preceding claims, **characterized in that** the automation component (10) has a housing (14) having a wall portion (46), and **in that** the spindle shaft (26) engages through or engages in the wall portion (46) so that its free end (48) is accessible from outside the housing (14).

10. Automation component (10) according to any of the preceding claims, **characterized in that** the spindle shaft (26) has two spindle threads (30, 32) having opposite pitches, each spindle thread (30, 32) driving a driver (34).

## Revendications

1. Composant d'automatisation (10), en particulier unité de préhension (12), unité linéaire ou unité pivotante, avec un entraînement (16),
avec un organe de réglage (24) entraîné par l'entraînement (16), qui est conçu comme un organe rotatif (24) pouvant être entraîné en rotation par l'entraînement,
avec une transmission (28) qui comprend comme élément d'entrée un arbre de broche (26), un filet de broche (30, 32) disposé sur l'arbre de broche et comme élément de sortie un entraîneur (34) engrenant le filet de broche (30, 32),
dans lequel l'élément rotatif (24) est couplé en mouvement à l'arbre de broche (26),
dans lequel l'engrenage (28) est conçu de telle sorte qu'il existe un autoblocage tel qu'une résistance d'inhibition due au frottement statique doit être dépassée pour permettre un mouvement de l'organe de sortie (34),
dans lequel une roue libre angulaire (40) est prévue entre l'organe rotatif (24) et l'arbre de broche (26), de sorte qu'en cas d'inversion du sens de rotation de l'organe rotatif (24), l'organe rotatif (24) peut être déplacé en rotation sur un angle libre découplé de l'arbre de broche (26),
dans lequel la roue libre angulaire (40) présente un premier élément (42) couplé de manière solidaire en rotation à l'organe rotatif (24) et un deuxième élément (44) couplé de manière solidaire en rotation à l'arbre de broche (26),
dans lequel le premier élément (42) ou le deuxième élément (44) présente deux sections de rotation (56) s'étendant parallèlement à l'axe de rotation (54) et un espace libre (58) entre respectivement deux sections de rotation (56) voisines,
dans lequel le deuxième élément (44) ou premier élément (42) présente des sections d'entraînement (60) s'insérant dans l'espace libre (58) respectif,
dans lequel les sections d'entraînement (60) peuvent tourner librement sur l'angle de dépouille dans les espaces libres (58), **caractérisé en ce que** les sections de rotation (56) et les sections d'entraînement (60) sont conçues comme des segments annulaires et le diamètre extérieur (A) des sections de rotation (56) correspond au diamètre extérieur (B) des sections d'entraînement (60).

2. Composant d'automatisation (10) selon la revendication 1, **caractérisé en ce que** les espaces libres (58) pour l'introduction axiale des sections d'entraînement (60) sont réalisés ouverts sur le bord.

3. Composant d'automatisation (10) selon la revendication 1 ou 2, **caractérisé en ce que** deux sections de rotation (56) sont prévues, qui délimitent deux espaces libres (58), dans lequel les espaces libres (58) s'étendent sur un angle a dans la plage de 90° à 150° et de préférence dans la plage de 110° à 130°.

4. Composant d'automatisation (10) selon la revendication 1, 2 ou 3, **caractérisé en ce que** deux sections d'entraînement (60) sont prévues, qui s'étendent sur un angle β dans la plage de 45° à 75° et de préférence dans la plage de 55° à 65°.

5. Composant d'automatisation (10) selon l'une quelconque des revendications précédentes, **caractérisé en ce que** le premier élément (42) présente une section de réception (50) de forme annulaire pour la réception solidaire en rotation de l'organe rotatif (24).

6. Composant d'automatisation (10) selon l'une quelconque des revendications, **caractérisé en ce que** le deuxième élément (44) présente une section de réception (50) de forme annulaire pour la réception solidaire en rotation de l'arbre de broche (26).

7. Composant d'automatisation (10) selon la revendication 5 ou 6, **caractérisé en ce que** le diamètre extérieur (C) de la section de réception (50) du premier élément ou du deuxième élément (44) correspond au diamètre extérieur (A) des sections de rotation (56) et au diamètre extérieur (B) des sections d'entraînement (60).

8. Composant d'automatisation (10) selon l'une quelconque des revendications précédentes, **caractérisé en ce que** l'organe rotatif (24) est creux et que l'arbre de broche (26) traverse l'organe rotatif.

9. Composant d'automatisation (10) selon l'une quelconque des revendications précédentes, **caractérisé en ce que** le composant d'automatisation (10) présente un boîtier (14) avec une section de paroi (46), que l'arbre de broche (26) traverse la section de paroi (46) ou s'insère dans celle-ci, de sorte que son extrémité libre (48) est accessible depuis l'extérieur du boîtier (14).

10. Composant d'automatisation (10) selon l'une quelconque des revendications précédentes, **caractérisé en ce que** l'arbre de broche (26) présente deux filets de broche (30, 32) à pas opposés, dans lequel chaque filet de broche (30, 32) entraîne un entraîneur (34).
